# EUROPEAN PATENT SPECIFICATION

(11) **EP 3 841 910 B1**
(45) Date of publication and mention of the grant of the patent: **20.09.2023**
(21) Application number: 20217157.5
(22) Date of filing: 23.12.2020
(51) Int. Cl.: A43B 13/32, A43B 9/12, A43D 25/20, A43B 1/00, H05B 6/10

(54) **METHOD FOR PRODUCING SHOE, SHOE, AND INDUCTION HEATING BONDING APPARATUS**
VERFAHREN ZUR HERSTELLUNG EINES SCHUHS, SCHUH UND INDUKTIONSERWÄRMUNGSKLEBEVORRICHTUNG
PROCÉDÉ DE PRODUCTION DE CHAUSSURE, CHAUSSURE ET ET APPAREIL DE LIAISON PAR CHAUFFAGE PAR INDUCTION

(30) Priority: 24.12.2019 JP 2019232974
(43) Date of publication of application: 30.06.2021
(73) Proprietor: ASICS Corporation, Kobe-shi, Hyogo 650-8555 (JP)
(72) Inventor: Tanabe, Tatsuro, Kobe-shi, Hyogo 650-8555 (JP)
(74) Representative: Stolmár & Partner Patentanwälte PartG mbB

(56) References cited:
- WO-A1-99/20136
- KR-A- 20170 117 292
- US-A1- 2014 000 043

## Description

### FIELD OF THE INVENTION

The present invention relates to a method for producing a shoe using induction heating and a shoe that can be produced by the method.

### BACKGROUND OF THE INVENTION

In the process of producing shoes, a method in which a hot melt bond used for bonding a plurality of shoe members to each other is irradiated with microwaves to be thereby heated and molten is sometimes used to bond the plurality of shoe members to each other.

Such a microwave heating method enables only the hot melt bond, which is a bonding element, to be selectively heated while the shoe members, which are objects to be bonded, are suppressed from being heated at the time of their bonding, and thus has an advantage of being capable of easily producing shoes. For example, JP 2017-061143 A discloses a method for producing shoe members by providing a hot melt bond layer between a plurality of foamed thermoplastic polyurethane particles and a surface of rubber or the like, followed by microwave-heating the hot melt bond layer by microwave irradiation to thereby bond the polyurethane particles and the surface to each other.

In the conventional method, however, the selectable hot melt bonds are limited to those composed of a thermoplastic that can be heated and molten by absorption of irradiated microwaves. Therefore, demanded has been another method that differs from the microwave heating method but still enables shoes to be easily produced. US 2014/000043 A1, KR 2017 0117292 A and WO 99/20136 A1 disclose further methods for producing a shoe by adhering shoe members to each other.

### SUMMARY OF THE INVENTION

### Technical Problem

It is an object of the present invention to provide a new method for producing a shoe and a shoe that can be easily produced.

### Solution to Problem

The present invention provides a method for producing a shoe as specified in appended independent claim 1.

Further, the present invention provides a shoe as specified in appended independent claim 8. Additional embodiments of the invention are disclosed in the dependent claims.

Further disclosed herein is an induction heating bonding apparatus capable of performing the aforementioned method for producing the shoe, the apparatus including: a coil inside which the first shoe member and the second shoe member can be arranged with the interface formed therebetween; and a pressure-contact mechanism configured to bring the first shoe member and the second shoe member into pressure contact with each other in the bonding step.

### BRIEF DESCRIPTION OF DRAWINGS

Fig. 1 is a schematic side view showing an arrangement step in a method for producing a shoe of one embodiment.
Fig. 2 is a schematic side view showing a bonding step in the method for producing the shoe of the embodiment.
Fig. 3 is a schematic side view showing an example of an adapter that can be used for the shoe and the method for producing the shoe.
Fig. 4A is a schematic side view showing another example of an adapter that can be used for the shoe and the method for producing the shoe.
Fig. 4B is a schematic front view showing another example of the adapter that can be used for the shoe and the method for producing the shoe.
Fig. 5 is a schematic side view showing still another example of an adapter that can be used for the shoe and the method for producing the shoe.
Fig. 6 shows a schematic view showing an apparatus used for the bonding step of the embodiment.
Fig. 7 is a schematic side view showing a shoe in another embodiment (not according to the invention).
Fig. 8 is a schematic side view showing a bonding step in a method for producing a shoe according to another embodiment (not according to the invention).

### DETAILED DESCRIPTION OF THE PREFERRED EMBODIMENT

A description will be hereinafter given on a method for producing a shoe, and a shoe, in embodiments of the present invention, with reference to the drawings. The following embodiments are merely examples. The present invention is not limited to the following embodiments at all, but is defined in the appended claims.

In each of the drawings referred to in the embodiments or the like, members having substantially the same function will be referred to with the same reference sign. Further, the drawings referred to in the embodiments are those schematically drafted, and the ratio of the dimensions of the object depicted in the drawings or the like may be different from the ratio of the dimensions of the actual object or the like.

Herein, the description will be made with a straight line passing through an end of a toe side and an end of a heel side of the shoe being referred to as a center line of the shoe, a direction along the center line being as a longitudinal direction, a direction orthogonal to the longitudinal direction and parallel to the ground engaging surface of the shoe being as a width direction, and a direction orthogonal to the longitudinal direction and perpendicular to the ground engaging surface of the shoe being as a height direction. Further, a toe side in the longitudinal direction is referred to as a front side, a heel side is as a rear side, a ground engaging surface side in the height direction of the shoe is as a lower side, and its opposite side is as an upper side.

Still further, when the end of the shoe toe side is designated as a 0% position, and the end of the shoe heel side is designated as a 100% position, a region in the range of 0% to 30% positions in the longitudinal direction (herein, the 30% position includes the position that lies on a straight line extending in the width direction orthogonal to the center line and passing the point on the shoe center line at which the 30% position lies. The same is applicable to the following definitions) is referred to as a forefoot portion, a region in the range of 30% to 80% is as a midfoot portion, and a region in the range of 80% to 100% is as a hindfoot portion.

Here, these regions are designated by the areas when the shoe is viewed from the top side.

### (Method for producing shoe)

A description will be given on the method for producing the shoe of this embodiment. In the method for producing the shoe of this embodiment, performed is an arrangement step of arranging a first shoe member, a second shoe member, and an adapter at least comprising a first thermoplastic, a second thermoplastic that differs in kind from the first thermoplastic, and a conductive material, so that the first shoe member and the second shoe member forms an interface through indirect contact with the adapter (bonding aid member) interposed therebetween. In the method for producing the shoe of this embodiment, further performed is a bonding step of inductively heating the conductive material to add heat to the interface and thereby bond the first shoe member and the second shoe member to each other.

As first and second shoe members that are bonded to each other in the production method, any shoe members used for a shoe are selected. Examples of such shoe members include, as the first and second shoe members, a shoe sole member such as a midsole, an outsole, or a sock liner; a shoe reinforcing member such as a heel counter or a shank; an upper; and a decorative material.

The combination of the first shoe member and the second shoe member is not particularly limited, and any combination of shoe members bonded to each other in the production of a shoe is selected. Examples of the combination of the first shoe member and the second shoe member include the combination of the midsole and the upper, the combination of the midsole and the outsole, the combination of the midsole and the shank, and the combination of the upper and the heel counter. The combination of the midsole and the upper is preferably selected as the combination of the first shoe member and the second shoe member. Each of the first shoe member and the second shoe member may be a part of a specific member that can be generally regarded as a single shoe member. For example, the first shoe member and the second shoe member may respectively be a first component and a second component of a midsole that are bonded to each other to form a single midsole.

The shape of the bonding aid member is not particularly limited. An example of the shape of the bonding aid member of this embodiment is a sheet shape. The bonding aid member is an adapter that at least includes a first thermoplastic, a second thermoplastic that differs in kind from the first thermoplastic, and the conductive material.

The adapter is configured such that it has a first surface and a second surface opposite to the first surface, that the first thermoplastic is present at a higher ratio than the second thermoplastic on the first surface, and that the second thermoplastic is present at a higher ratio than the first thermoplastic on the second surface.

In the case where the sheet-shaped bonding aid member is used, the first and second shoe members can respectively have first and second bonded surfaces that are respectively bonded to the first and second surfaces of the adhesive aid member. Further, in the arrangement step, the first shoe member and the second shoe member are arranged to be brought into abutting contact respectively with the first surface and the second surface.

The first bonded surface of the first shoe member is configured to be capable of being bonded to the first thermoplastic exposed on the first surface of the bonding aid member. It is preferable that a resin of the same kind as the first thermoplastic be exposed on the first bonded surface in terms of the bonding capability to the first surface. For example, in the case where the first thermoplastic is an EVA resin, the first bonded surface may also have an EVA resin exposed thereon. The second bonded surface of the second shoe member is configured to be capable of being bonded to any of the resins exposed on the second surface of the bonding aid member, preferably a resin present at a higher ratio than any other resin on the second surface. For example, in the case where the second thermoplastic is present at a higher ratio than any other resin on the second surface, the second bonded surface is configured to be capable of being bonded to the second thermoplastic. It is preferable that a resin of the same kind as the second thermoplastic be also exposed on the second bonded surface in terms of the bonding capability to the second surface.

The first and second shoe members may include one or more members composed of any material such as a foam, a rubber, a fabric, a metal, a resin, or fibers, as long as they respectively include the first and second bonded surfaces as described above. For example, the first or second shoe member may be a shoe sole member composed of a foam.

The conductive material is any material that has conductivity and can be heated by induction heating in the bonding step to be described later, and includes, for example, a metal such as aluminum or copper, or carbon such as carbon black, graphite, fullerene, graphene, or carbon nanofibers. Herein, the metal as a conductive material may be any alloy or a conductive metal oxide such as titanium oxide, besides a single metal, as long as it has conductivity. The form of the conductive material is not particularly limited, and may be, for example, a sheet form, a powder form, a fiber form, or a flake form. The sheet form herein includes a form in which the sheet has a uniform or non-uniform thickness and a form in which the sheet has a surface subjected to three-dimensional machining and/or provided with one or more through hole, and includes a film form, a mesh form, a woven fabric form, or any form similar thereto. The conductive material may be composed of a different material or configured in a different form, depending on the position at which the conductive material is arranged.

The conductive material is arranged at a position at which the interface can be heated. The conductive material is preferably arranged at a position at which the distance between the conductive material and the interface is within 50 pm, so that the heat of the conductive material when being inductively heated is easily transferred to the interface.

As the first shoe member and the second shoe member are brought into contact with each other via the bonding aid member, the conductive material is preferably arranged at a position at which the distance between the conductive material and the bonding aid member is within 50 pm. The conductive material may be arranged at the same position as the bonding aid member. For example, the conductive material may be arranged inside the bonding aid member.

The bonding aid member is a member arranged between the first and second shoe members to be able to aid the bonding of these shoe members. For example, the bonding aid member may include a thermoplastic functioning as a hot melt bond that can be heated and molten by the heat of the conductive material inductively heated in the subsequent bonding step, may include a thermosetting resin functioning as a thermosetting bond that can be cured by the heat, and may include other organic or inorganic materials.

The thermoplastic that can be included in the bonding aid member can be any thermoplastic including, for example, a polyolefin resin such as a polyethylene (PE) resin or a polypropylene (PP) resin, a thermoplastic polyurethane (TPU) resin, a polystyrene (PS) resin, an ethylene-propylene rubber (EPDM), a polyether block amide (PEBA) resin, a polyester (PEs) resin, an ethylene vinyl acetate (EVA) resin, and a polyamide (PA) resin. Preferably, a resin that has a melting point or a softening point falling within a range of 70 °C to 140 °C is selected as the thermoplastic. Use of such a resin enables the thermoplastic included in the bonding aid member to be easily and efficiently heated and molten in the subsequent bonding step.

The thermosetting resin included in the bonding aid member can be, for example, a thermosetting polyurethane-based elastomer, an acrylic elastomer, a crosslinked rubber, a silicone-based elastomer, or a fluorine-based elastomer. Preferably, a resin that includes a cured product having a softening point falling within a range of 80 °C to 180 °C is selected as the thermosetting resin.

The bonding aid member according to the present invention includes two or more kinds of the aforementioned resins, and includes a first resin that can be bonded to the bonded surface of the first shoe member, and a second resin that differs from the first resin and can be bonded to the bonded surface of the second shoe member. In such a case, the first resin is exposed on the first surface of the bonding aid member that is brought into abutting contact with the bonded surface of the first shoe member, and the second resin is exposed on the second surface that is brought into abutting contact with the bonded surface of the second shoe member. Use of such a bonding aid member enables two shoe members having different bonding capability to a resin to be bonded to each other via the bonding aid member. The resins respectively exposed on the first and second surfaces are preferably the same kinds of resins as those resins respectively exposed on the bonded surfaces of the first and second shoe members in terms of the bonding capability to the first and second shoe members. For example, in the case where an EVA resin is exposed on the bonded surface of the first shoe member, the resin exposed on the first surface may also be an EVA resin, and in the case where a TPU resin is exposed on the bonded surface of the second shoe member, the resin exposed on the second surface may also be a TPU resin.

According to the present invention, the first resin is present at a higher ratio than the second resin on the first surface of the bonding aid member, and the second resin is present at a higher ratio than the first resin on the second surface of the bonding aid member. This enables the first resin to more effectively exhibit its bonding capability on the first surface, and the second resin to more effectively exhibit its bonding capability on the second surface. The ratios of the respective resins present on the first and second surfaces can be measured, for example, using Fourier-transform infrared spectroscopy (FT-IR) by the diamond ATR method.

The bonding aid member includes the conductive material in addition to these resins. In other words, the conductive material is a part of the bonding aid material. In such a case, the conductive material is arranged in the interface as a part of the bonding aid material. For example, the bonding aid member may be a composite resin member formed to have the conductive material arranged in a resin.

The bonding aid member may include any component different from a material that can aid bonding between the first shoe member and the second shoe member. For example, the bonding aid member may further include a chemical such as a pigment, an antioxidant, or an ultraviolet absorber.

Hereinafter, a description will be given on the method for producing the shoe of the present invention, with reference separately to an embodiment in which the first shoe member and the second shoe member are bonded to each other via the bonding aid member, and an embodiment in which the first shoe member and the second shoe member are directly bonded to each other (not according to the invention). In the following embodiments, a description will be given by exemplifying the first shoe member as a midsole 2 being a shoe sole member, and the second shoe member as an upper 3.

### (First embodiment)

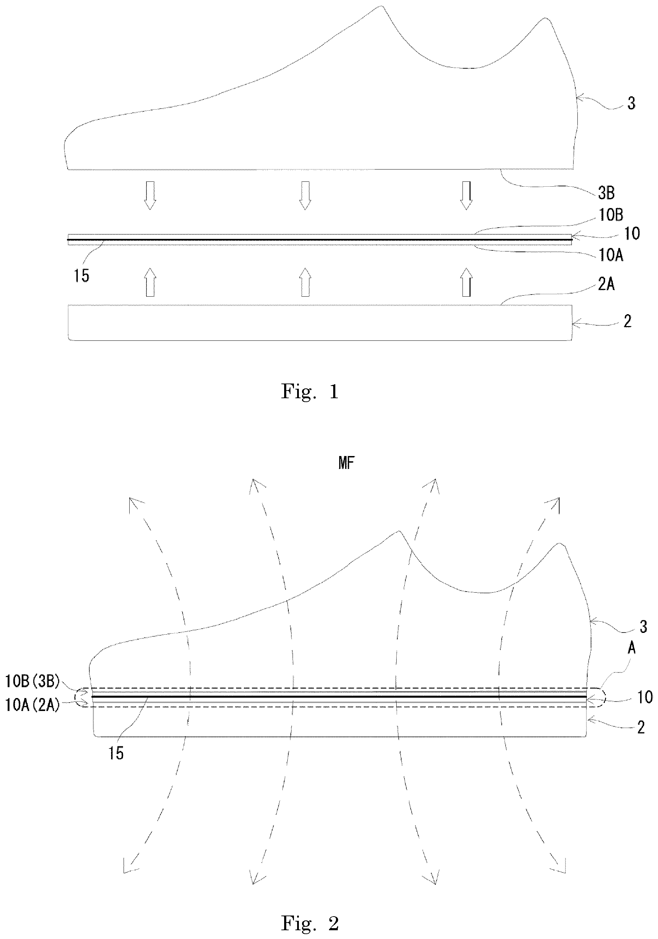

In the first embodiment, as shown in Figs. 1 to 5, the first shoe member and the second shoe member are bonded to each other via the bonding aid member.

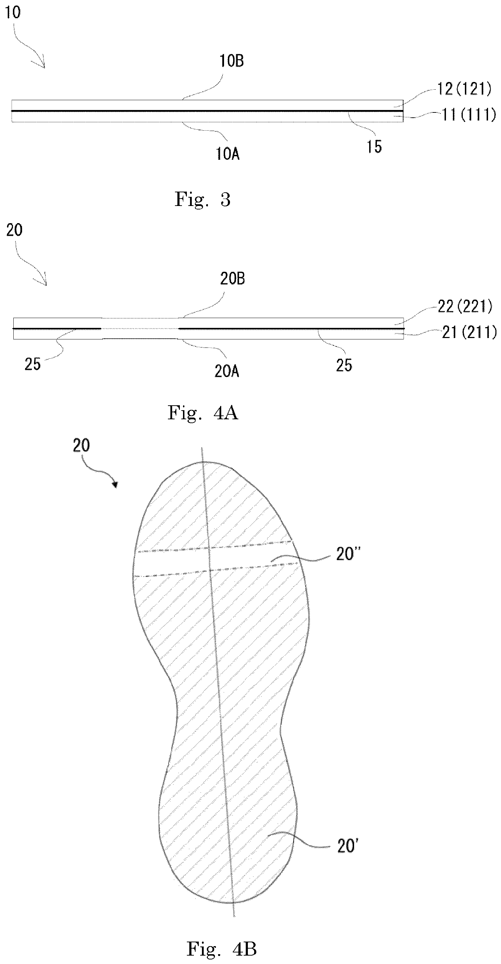

In this embodiment, as shown in Fig. 1, a first shoe member 2 and a second shoe member 3 are arranged in the arrangement step to form an interface A through indirect contact between these shoe members with a bonding aid member 10 interposed therebetween as shown in Fig. 3. In this embodiment, a conductive material 15 is included in the bonding aid member 10, and the first shoe member 2 and the second shoe member 3 are brought into abutting contact with each other via the sheet-shaped bonding aid member (hereinafter referred to also as the bonding aid sheet) 10 including the conductive material 15. This configuration causes the conductive material 15 along with the bonding aid member 10 to be arranged in the interface A between the first shoe member 2 and the second shoe member 3, and thus enables heating of the interface A when the conductive material 15 is heated in the subsequent bonding step.

Fig. 3 shows an example of the bonding aid member including the conductive material. In this example, shown are the bonding aid sheet 10 composed mainly of a thermoplastic, and the sheet-shaped conductive material (hereinafter referred to also as the conductive sheet) 15 arranged across the substantially entire surface of the bonding aid sheet 10 so that the conductive material is present across the substantially entire area in a thickness direction of the bonding aid sheet 10. More specifically, the bonding aid sheet 10 shown in Fig. 3 includes a first preliminary sheet 11 composed mainly of a first thermoplastic 111, and a second preliminary sheet 12 composed mainly of a second thermoplastic 121 and laminated on the first preliminary sheet 11, and the conductive sheet 15 is sandwiched between the first and second preliminary sheets 11 and 12 through their substantially entire surfaces. That is, in this embodiment, the first preliminary sheet 11 and the second preliminary sheet 12 are indirectly superposed on each other via the conductive sheet 15. Here, a surface of the first preliminary sheet 11 opposite to the surface on which the second preliminary sheet 12 is superposed constitutes a first surface 10A of the bonding aid sheet 10, and a surface of the second preliminary sheet 12 opposite to the surface on which the first preliminary sheet 11 is superposed constitutes a second surface 10B of the bonding aid sheet 10. In this embodiment, the bonding aid sheet 10 has a shape in conformity with contact surfaces between the midsole 2 and the upper 3, and specifically, has a shape substantially in conformity with the shape of the entire upper surface of the midsole 2. That is, the bonding aid sheet 10, or consequently the conductive sheet 15, is to be arranged across the substantially entire surfaces between the midsole 2 and the upper 3 when the midsole 2 and the upper 3 are bonded to each other via the bonding aid sheet 10 in the subsequent bonding step.

In this example, the first thermoplastic 111 is exposed on one surface (first surface 10A) of the bonding aid sheet 10, and the second thermoplastic 121 is exposed on the other surface (second surface 10B) thereof. In this example, the second thermoplastic 121 is composed of a resin different in kind from the first thermoplastic 111, but, in substitution therefor, may be composed of a resin that is the same in kind as the first thermoplastic 111. That is, the resins 111 and 121 respectively exposed on the first and second surfaces 10A and 10B of this bonding aid sheet are different in kind from each other, but may be the same in kind as each other.

It is preferable that the first and second preliminary sheets 11 and 12 and the conductive sheet 15 are respectively bonded to each other by any method. In this case, the bonding aid sheet 10 is easily handled. For example, the first and second preliminary sheets 11 and 12 and the conductive sheet 15 may be respectively bonded to each other via a primer. Examples of the primer used for bonding these sheets to each other include an EVA-based primer including EVA. The primer may be a water-based primer such as a polyolefin-based emulsion, an EVA-based emulsion, an acrylic emulsion, or a urethane-based emulsion; an acrylic resin-based primer; a polyamide-based primer; an olefin-based primer; a phenol resin-based primer; a polyester-based primer; a polyurethane-based primer; or a chloroprene rubber-based primer. Alternatively, the first and second preliminary sheets 11 and 12 and the conductive sheet 15 may be respectively bonded to each other only by the bonding force of the resins 111 and 121 themselves exposed on the surfaces of these preliminary sheets 11 and 12 contacting the conductive sheet 15, or may be bonded to each other by heating and melting of the resins 111 and 121.

The first and second preliminary sheets 11 and 12 and the conductive sheet 15 may be integrated with each other by any method other than the bonding. Further, the first and second preliminary sheets 11 and 12 and the conductive sheet 15 are not necessarily integrated with each other, and an aggregate of the separate first and second preliminary sheets 11 and 12 that are superposed on each other may be defined as the bonding aid sheet 10. In this case, the first and second preliminary sheets 11 and 12 and the conductive sheet 15 are integrated with each other by induction heating in the bonding step.

The thickness of the conductive sheet 15 is not particularly limited, but is preferably 0.1 mm or more to enable the first and second thermoplastics 111 and 121 included in the bonding aid sheet 10 to be heated and molten by the induction heating in the subsequent bonding step.

The thickness of the conductive sheet 15 may be uniform across the entire area, or may partially vary. For example, the conductive sheet 15 may have a smaller thickness in a certain area of the bonding aid sheet 10 than other areas thereof. It is preferable that, when the interface A is formed, the conductive sheet 15 be provided to have a smaller thickness in a portion corresponding to a portion of at least one of the first shoe member 2 and the second shoe member 3 to which flexibility is imparted in the portion in which the first shoe member 2 and the second shoe member 3 are in abutting contact with each other via the conductive sheet 15 (hereinafter referred to also as a flexibility imparting portion), than other portions of the conductive sheet 15. That is, the shoe 1 of this embodiment may include a sheet-shaped conductive material having a smaller thickness in the flexibility imparting portion than other portions of the conductive sheet 15. In such a case, it is advantageous in the shoe sole member of the shoe 1 produced by the method of this embodiment that possible loss of flexibility caused by the conductive sheet arranged in the interface A can be relatively suppressed in the flexibility imparting portion. Examples of the flexibility imparting portion include a portion of the shoe sole member, for example, the midsole 2, of the shoe 1 produced in this embodiment, the portion to which flexibility is imparted and in which the midsole 2 and the upper 3 are in abutting contact with each other. Such a flexibility imparting portion refers to, for example, a portion of the shoe sole member supporting the MP joints and their adjacent areas or the like of a foot of a wearer with a standard figure, is the portion being in contact with the upper 3 in the interface A.

As will be described with reference to Figs. 4A and 4B later, the conductive sheet 15 may include no conductive material in a portion to be provided in the flexibility imparting portion. In the case where the configuration of the conductive sheet 15 is defined such that it includes a sheet having a smaller thickness in a certain portion than other portions, and any similar definition thereto is used hereinafter, such a definition shall include the configuration of the conductive sheet 15 that includes no sheet in a certain portion unless otherwise specified.

The portion of the conductive sheet 15 provided in the flexibility imparting portion does not necessarily have a smaller thickness than other portions thereof. For example, in the case where the shoes 1 produced in this embodiment are sports shoes and thus require a certain level of hardness even in the flexibility imparting portion, the portion of the conductive sheet 15 provided even in the flexibility imparting portion may preferably have a sufficient thickness.

The conductive sheet 15 may be a mesh including the conductive material, or may be a woven fabric, a non-woven fabric, or the like including conductive fibers. Optionally, the conductive sheet 15 may have one or a plurality of holes extending therethrough. In such a case, the position(s) of the hole(s) extending through the conductive sheet 15 is not limited, but a relatively large number of holes or a relatively large hole(s) may be formed to extend through the conductive sheet 15 in the aforementioned flexibility imparting portion.

The conductive sheet 15 is not necessarily composed of the same material or configured in the same form across the entire surface, but different materials may be arranged in the conductive sheet 15 depending on the portions. For example, in order to increase the hardness or resilience of certain portions (for example, portions provided under the hallux ball and the hypothenar) of the conductive sheet 15, the configuration may be such that the certain portions are composed of a sheet having high hardness and high resilience, such as a sheet including carbon fibers, and other portions are composed of an aluminum sheet.

The thickness of the bonding aid sheet 10 in which the conductive sheet 15 is included is not particularly limited, but is preferably 100 pm or more in order to secure an amount of resin with which the bonding aid sheet is impregnated. Further, the thickness is preferably 1,500 pm or less in order to sufficiently secure the flexibility of the shoe sole of the shoe produced by the method according to this embodiment. The first and second preliminary sheets 11 and 12 each have a thickness appropriately selected depending on the thicknesses of the bonding aid sheet 10 and the conductive sheet 15. For example, the thicknesses of the first and second preliminary sheets 11 and 12 may each fall within a range of 150 pm to 1,000 pm. The thickness of the first preliminary sheet 11 and the thickness of the second preliminary sheet 12 may be equal to each other, or may be different from each other. These thicknesses may be changed depending on the portions of the bonding aid sheet 10, in consideration of, for example, the flexibility required for the bonding aid sheet 10.

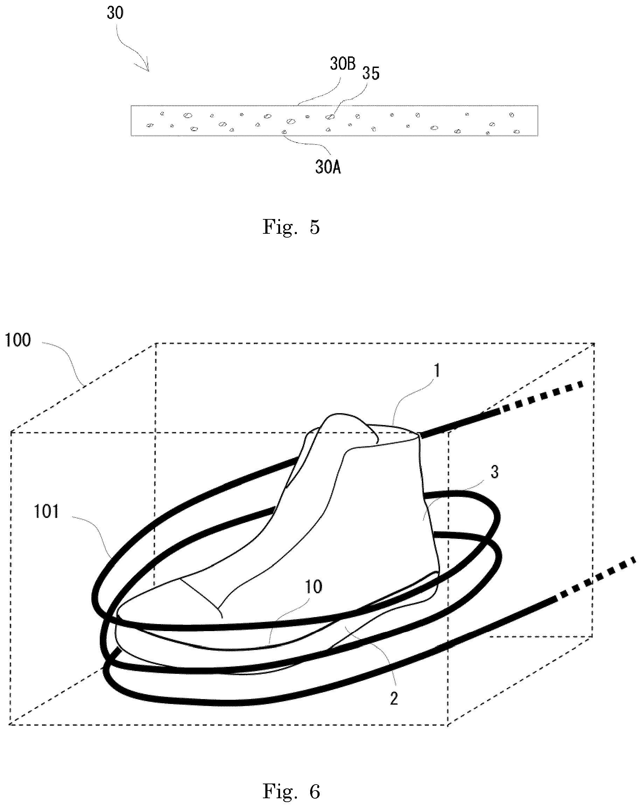

In this embodiment, the bonding aid member 10 shown in Fig. 3 is used as the bonding aid member as aforementioned, but the bonding aid member that can be used in this embodiment is not limited thereto. For example, bonding aid members 20 and 30 or the like respectively shown in Figs. 4 and 5 can be used in substitution for the bonding aid member 10.

Fig. 4A shows another example of a bonding aid member including a conductive material. This bonding aid member 20 is a bonding aid sheet 20 having a shape substantially conforming to the shape of the entire upper surface of the midsole 2, and is similar to the bonding aid member 10 shown in Fig. 3 in that it includes a first preliminary sheet 21 composed mainly of a first thermoplastic 211 and a second preliminary sheet 22 composed mainly of a second thermoplastic 221 and laminated on the first preliminary sheet 21, and has a conductive sheet 25 sandwiched between the first and second preliminary sheets 21 and 22. Similar to the bonding aid member 10, first and second surfaces 20A and 20B of the bonding aid member 20 are also respectively constituted by the surfaces of the first and second preliminary sheets 21 and 22 respectively opposite to the surfaces thereof facing each other. On the other hand, this bonding aid sheet 20 differs from the bonding aid sheet 10 of Fig. 3 in that it has the conductive sheet 25 arranged not in the substantially entire area in the thickness direction of the bonding aid sheet 20, but includes some areas in which no conductive sheet is arranged. As aforementioned, the definition of the configuration that some areas in which no conductive sheet is arranged in the thickness direction falls within the definition of the configuration that the conductive sheet 25 in those areas has a smaller thickness than other areas of the bonding aid sheet 20.

As shown in Fig. 4B, the bonding aid member 20 has a first area 20' including the conductive sheet 25, and a second area 20" not including the conductive sheet 25. In this example, the second area 20" is provided in the flexibility imparting portion as the portion supporting the MP joints and their adjacent areas of a foot of a wearer with a standard figure. Thus, the bonding aid sheet 20 has an advantage of preventing its flexibility in the MP joint area from being impaired by the conductive material. In this embodiment, the first preliminary sheet 21 and the second preliminary sheet 22 are superposed on each other indirectly via the conductive sheet 25 in the first area 20', and directly in the second area 20".

The first and second preliminary sheets 21 and 22 and the conductive sheet 25 are preferably bonded to each other by any method as in the example of the bonding aid sheet 10 shown in Fig. 3, but may be integrated with each other by a method other than bonding, or do not have to be integrated with each other. In the case where the preliminary sheets 21 and 22 and the conductive sheet 25 are integrated with each other, the bonding aid sheet 10 is easily handled. In the case where these sheets are not integrated with each other, on the other hand, the sheets are integrated with each other to form the bonding aid sheet 20 during induction heating in the subsequent bonding step.

It is preferable that the thickness of the conductive sheet 25 and the thickness of the bonding aid sheet 20 respectively fall within the same range as that of the example of the bonding aid sheet 10 shown in Fig. 3, and the thicknesses of the first and second preliminary sheets 21 and 22 are appropriately selected depending on the thickness of the bonding aid sheet 20. These thicknesses may be changed depending on the portions of the bonding aid sheet 20, in consideration of, for example, the flexibility required for the bonding aid sheet 20.

Fig. 5 shows still another example of a bonding aid member including a conductive material. This bonding aid member 30 is a bonding aid sheet 30 having a shape substantially conforming to the shape of the entire upper surface of the midsole 2, and has a conductive material 35 dispersed therein. In the example shown in Fig. 5, the conductive material 35 has a powder form. However, as aforementioned, the conductive material 35 may be dispersed in the bonding aid sheet 30 in any form including, for example, a fiber form or a flake form.

It is preferable that the thickness of the bonding aid sheet 30 having the conductive material 35 dispersed therein also fall within the same range as that of the example of the bonding aid sheet 10 shown in Fig. 3.

The bonding aid members respectively shown in Fig. 3 to Fig. 5 are each composed mainly of a thermoplastic, but may be composed mainly of a thermosetting resin, or may be of an inorganic material. For example, a bonding aid member may be made of a preliminary sheet composed mainly of a thermoplastic and a thermosetting resin applied to the preliminary sheet, or may have a conductive material sandwiched therebetween.

Optionally, a primer application step of applying a primer on at least any one of the bonded surfaces of the first and second shoe members and the first and second surfaces of the bonding aid member may be performed before bringing the first and second shoe members and the bonding aid member into contact with each other in this step. In such a case, the surface can be subjected to surface modification treatment.

In the arrangement step, the interface may be preliminarily fixed by any method. For example, the surfaces in the interface may be preliminarily bonded to each other by the aforementioned primer, by the bonding force of the resins themselves exposed on the surfaces contacting each other, or by, for example, a double-sided tape or a pressure-sensitive bonding tape. In addition thereto or in substitution therefor, the interface may be physically fixed by, for example, being held clamped so as to be pressed from the outside of the interface.

Performed after the arrangement step is, as shown in Fig. 2, the bonding step of adding heat to the interface A by inductively heating the conductive material 15 to thereby bond the first shoe member (midsole 2) and the second shoe member (upper 3) to each other. The induction heating of the conductive material 15 is invoked by arranging the conductive material 15 in an alternating magnetic field MF.

In this embodiment, the conductive material 15 generates heat when it is inductively heated. The generated heat of the conductive material is transferred to the bonding aid member in which the conductive material is included, so that the first and second shoe members in indirect contact with each other via the bonding aid member are bonded to each other via the bonding aid member. For example, in the case where the bonding aid member includes a thermoplastic, the bonding aid member arranged in the interface is heated and molten by the heat of the conductive material to be thereby bonded to the bonded surfaces of the first and second shoe members. The adhesion is generally completed when the bonding aid member is heated and molten, followed by being cooled and solidified. The bonding aid member not integrally formed in advance is integrally formed at this stage.

For example, as shown in Fig. 6, the inductive heating of the conductive material can be performed by an apparatus 100 that includes a coil configured to allow the first and second shoe members with the interface formed therebetween to be arranged inside the coil. In such an apparatus 100, a coil 101 inside which the first and second shoe members in contact with each other are arranged is energized so that the alternating magnetic field for induction heating can be efficiently applied to the conductive material arranged in the interface A between the first and second shoe members.

The induction heating of the conductive material can be performed by an apparatus further including a pressure-contact mechanism capable of bringing the first shoe member and the second shoe member into pressure contact with each other (i.e., induction heating bonding apparatus), in addition to the aforementioned coil. Such an apparatus enables efficient induction heating while pressing the interface A between the first and second shoe members, and thus enables the first and second shoe members to be more securely bonded to each other. As a pressure-contact mechanism, a shoe last F used for an induction heating bonding apparatus to be described later can be employed. As other pressure-contact mechanisms, a clamp jig or a combination of the jig and the shoe last can be employed. However, the induction heading of the conductive material may be performed with any apparatus such as a heating apparatus like a general household IH stove, in which a coil is mounted inside a plate-shaped surface cover, without limitation to the aforementioned apparatuses.

In the aforementioned step, the frequency of the alternating magnetic field for causing induction heating to the bonding aid member is not particularly limited, and may be in a range of approximately 50 to 60 Hz, which are the common commercial frequencies, or may be higher. For example, the frequency of the alternating magnetic field may fall within a range of 50 Hz to 500 MHz. The intensity of the alternating magnetic field and the duration for irradiation of the alternating magnetic field in this step are not particularly limited, and can be such an intensity and duration as to be capable of sufficiently heating the conductive material to bond the first shoe member and the second shoe member to each other.

In the example shown in Fig. 6, the shoe in which the midsole 2 as the first shoe member and the upper 3 as the second shoe member are bonded to each other via the bonding aid member 10 can be produced by performing the aforementioned steps. At this time, the conductive material 15 may be arranged not only between the upper and the midsole but also between the midsole and the outsole to simultaneously bond the upper, the midsole, and the outsole to each other.

In the method of this embodiment, induction heating is used as a heating means of the interface A between the first shoe member 2 and the second shoe member 3. This enables selective heating of the conductive member 15 only, and minimizes influences caused by the heating in areas other than the area close to which the conductive material 15 is present. Thus, only the interface A in which the conductive material 15 is arranged can be selected with high accuracy for heating. The induction heating in the method of this embodiment can be performed by a coil that can generate an alternating magnetic field for causing the induction heating, and thus does not necessitate any complicated or large-scale apparatus unlike conventional methods. This configuration enables the shoe members 2 and 3 to be bonded to each other using a simple and compact apparatus, and thereby increases design flexibility of the apparatus for use. This allows the combination of the first and second shoe members 2 and 3 to be easily customized according to the preferences of a user.

Further, in this embodiment, in the case where the bonding aid member 10 includes a thermoplastic or a thermosetting resin that functions as a hot melt bond, the shoe 1 produced by this embodiment can have the first shoe member 2 and the second shoe member 3 caused to be separated from each other by inductively heating the conductive material included in the interface A again to thereby heat and melt the bonding aid member 10 again, followed by peeling off the first shoe member 2 and the second shoe member 3 from each other. Another shoe member can adhere to the first or second shoe member 2 or 3 thus separated, using a production method according to the first embodiment or a second embodiment to be described later. Thus, in the shoe 1 produced by the method of this embodiment, either of the first and second shoe member 2 and 3 bonded to each other via the conductive material 15 can be replaced even after the shoe 1 is produced as a finished product.

### (Second embodiment - not according to the invention)

A second embodiment is the same as the first embodiment in that the first shoe member 2 and the second shoe member 3 are bonded to each other via a bonding aid member 40. On the other hand, the second embodiment is different from the first embodiment in that the bonding aid member 40 is composed only of a conductive material 45 including no resin material, that is, the conductive material 45 itself functions as the conductive aid member 40.

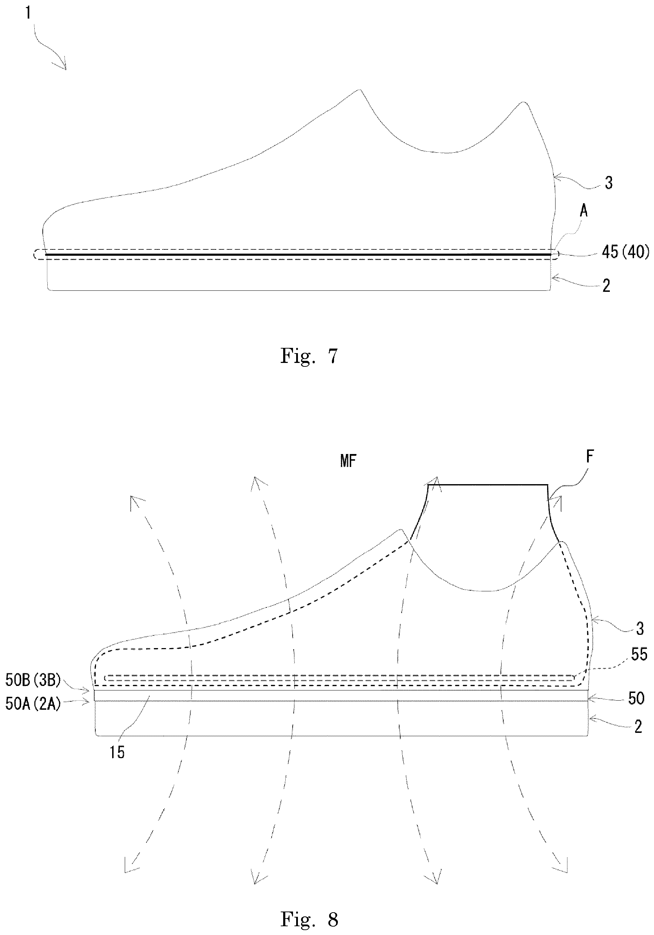

In this embodiment, first in an arrangement step, the first shoe member 2 and the second shoe member 3 are arranged to form the interface A through indirect contact between these shoe members with the bonding aid member 40 composed only of the conductive material 45 therebetween, as shown in Fig. 7. The bonding aid member 40, that is, the conductive material 45 is composed of a metal and/or a carbon material having any form, for example, a sheet form, a mesh form, a woven fabric form, a powder form, a fiber form, or a flake form.

In the case where the bonding aid member 40 does not thoroughly cover either or both of the bonded surfaces of the first and second shoe members 2 and 3 in the interface A, the first shoe member 2 and the second shoe member 3 can respectively have some portions of the bonded surfaces in direct contact with each other. In such a case, the first shoe member 2 and the second shoe member 3 have some portions in indirect contact with each other via the bonding aid member 40 while having other portions in direct contact with each other.

Performed after this arrangement step is, as in the first embodiment, a bonding step of inductively heating the conductive material 45 to add heat to the interface and thereby bond the first shoe member 2 and the second shoe member 3 to each other. In this embodiment, the heat of the conductive material generated by the induction heating is transferred to the bonded surfaces of the first and second shoe members 2 and 3 with which the conductive material is in contact in the interface A, to thereby heat and melt resins exposed on the bonded surfaces. Thus, the first and second shoe members are bonded to each other indirectly via the bonding aid member in the portion in which the bonded surfaces are in indirect contact with each other via the bonding aid member, and directly in the portion in which the bonded surfaces are in direct contact with each other.

The shoe 1 produced by this embodiment also has an advantage that the first shoe member 2 and the second shoe member 3 can be peeled off from each other by inductively heating the conductive material included in the interface A again to thereby heat and melt the resins exposed on the bonded surfaces of the first and second shoe members 2 and 3 again.

### (Third embodiment - not according to the invention)

In a third embodiment, unlike the first and second embodiments, the conductive material is arranged not in the interface A but in a portion different from the interface A or the first and second shoe members.

That is, in this embodiment, a conductive material 55 is arranged so that a part of the upper 3 as the second shoe member is positioned between the midsole 2 as the first shoe member and the conductive material 55. Specifically, as shown in Fig. 8, a shoe last F having a bottom portion provided with the conductive material 55 is placed in the upper 3 to have the conductive material 55 arranged to press a surface opposite to the bonded surface of the upper 3 from above in the interface A. This configuration causes an insole portion of the upper 3 being pressed by the bottom portion of the shoe last F to be sandwiched between the conductive material 55 and the midsole 2.

The shoe last F having the bottom portion provided with the conductive material 55 preferably has a shape conforming to the inside dimension of the upper 3 used in this embodiment. In such a case, the adhesion is performed with such a shoe last F placed in the upper 3 to thereby enable the conductive material 55 to be securely arranged at a positon at which the interface can be heated while stably retaining the shape of the upper 3.

In this embodiment, as shown in Fig. 8, the first shoe member 2 and the second shoe member 3 are in indirect contact with each other via a bonding aid member 50 in the interface A. The bonding aid member 50 is a material capable of bonding the first and second shoe members to each other by heating in the interface A, and is, for example, a bonding aid sheet 50 including a thermoplastic or a thermosetting resin. As aforementioned, the bonding aid member 50 includes no conductive material.

Performed after this arrangement step is, as in the first embodiment, a bonding step of inductively heating the conductive material 55 provided on the shoe last F to add heat to the interface and thereby bond the first shoe member (midsole 2) and the second shoe member (upper 3) to each other. In this embodiment, the heat of the conductive material generated by the induction heating is transferred from the conductive material arranged above the interface A to the bonding aid member 50 in the interface A, to thereby cause the first and second shoe members 2 and 3 in indirect contact with each other via the bonding aid member 50 to be bonded to each other via the bonding aid member 50.

In this embodiment, the shoe last F having the bottom portion provided with the conductive material 55 may constitute a part of a pressure-contact mechanism of an induction heating bonding apparatus. That is, the bonding step of this embodiment can be performed by the induction heating bonding apparatus further including: a coil inside which the first and second shoe members in contact with each other can be arranged; and the pressure-contact mechanism capable of bringing the first shoe member and the second shoe member into pressure contact with each other.

In this embodiment, the first shoe member 2 and the second shoe member 3 are in indirect contact with each other via the bonding aid member 50, but the bonding aid member 50 is not an essential requirement in the production method using the shoe last F having the bottom portion provided with the conductive material 55, and the first shoe member 2 and the second shoe member 3 may be in direct contact with each other. In such a case, the resins exposed on the bonded surfaces of the first and second shoe members are heated and molten in the bonding step to thereby directly bond the first and second shoe members to each other.

### (Shoe)

A shoe of the present disclosure includes: a first shoe member; a second shoe member; and an adapter arranged between the first shoe member and the second shoe member and at least comprising a first thermoplastic, a second thermoplastic that differs in kind from the first thermoplastic and a conductive material, wherein the first shoe member and the second shoe member are bonded to each other via the adapter comprising the conductive material. The adapter has a first surface and a second surface opposite to the first surface, the first thermoplastic being present at a higher ratio than the second thermoplastic on the first surface, and the second thermoplastic being present at a higher ratio than the first thermoplastic on the second surface. The first shoe member and the second shoe member are arranged to have the first shoe member in abutting contact with the first surface of the adapter and the second shoe member in abutting contact with the second surface of the adapter. For example, the shoe of the present disclosure is a shoe that can be produced by the methods for producing the shoe of the aforementioned first and second embodiments.

The conductive material is arranged along with other bonding aid members such as a resin in the interface in which the first shoe member and the second shoe member are bonded to each other, as in the shoe produced by the first embodiment, or may be arranged solely in the interface, as in the shoe produced by the second embodiment (not according to the invention). In the shoe 1 shown in Fig. 8 (not according to the invention), the conductive material 5 has a sheet shape, but as aforementioned, the conductive material may have any other form such as a powder form, a fiber form, or a flake form. The conductive material 55 is arranged to have a uniform thickness across the entire area between the first and second shoe members, but the conductive member may have a smaller thickness, or may be absent in a certain area of the interface A between the first shoe member and the second shoe member, for example an area where a shoe sole member as the first or second shoe member is provided in a flexibility imparting portion as a portion supporting the MP joints and their adjacent areas or the like of a foot of a standard wearer.

Since the shoe of the present invention has the conductive material arranged between the first and second shoe members, the first shoe member and the second shoe member can be separated from each other by inductively heating the conductive material to heat and melt the resins of the first and second shoe members in the interface. Another shoe member can be bonded to the first or second shoe member thus separated, using the production method according to the aforementioned first or second embodiment. Thus, in the shoe of the present invention as a finished product, either of the first and second shoe members bonded to each other via the conductive material can be replaced with another shoe member.

The shoe of the present disclosure can exhibit various functions according to the kind of the conductive material arranged between the first and second shoe members. For example, use of a metal having sterilizing action, such as copper, as the conductive material can impart a sterilizing effect to the shoe. In this case, the conductive material is preferably arranged so that the air in the shoe can be in contact with the conductive material that is the metal, in order to enable the shoe to have the sterilizing action. Further, use of a material with antistatic action as the conductive material can give an antistatic effect to the shoe. In the case where the conductive material is a metal sheet, such a conductive material can increase radio sensitivities of various sensors.

### (Induction heating bonding apparatus - not according to the invention)

The induction heating bonding apparatus disclosed herein can perform the methods for producing the shoe according to the aforementioned first to third embodiments. The apparatus includes: a coil inside which the first shoe member and the second shoe member can be arranged with the interface formed therebetween; and a pressure-contact mechanism configured to bring the first shoe member and the second shoe member into pressure contact with each other in the bonding step.

Examples of the coil include a coil C used for the apparatus shown in Fig. 6. The coil is configured to allow the first shoe member and the second shoe member to form the interface inside the coil, and is configured to enable the first shoe member and the second shoe member to be introduced inside the coil after the first shoe member and the second shoe member are brought into abutting contact with each other outside the coil.

The pressure-contact mechanism may include any configuration capable of bringing the first shoe member and the second shoe member having the interface formed therebetween to pressure contact with each other. For example, in the case where the first shoe member is the shoe sole member 2 such as a midsole and the second shoe member is the upper 3, as shown in Fig. 8, the pressure-contact mechanism can be a mechanism including the shoe last F, in which the shoe last F is placed in the upper 3 as the second shoe member to press the bonded surface of the upper 3 in the interface A. Other pressure-contact mechanisms employable are, for example, a clamp jig and a combination of the jig and the shoe last F. The shoe last F may at least have the bottom portion provided with the conductive material 55. In such a case, as aforementioned in the third embodiment, the interface between the first shoe member and the second shoe member can be heated by inductively heating the conductive material provided in the pressure-contact mechanism.

The method for producing the shoe of the present disclosure is advantageously performed by the induction heating bonding apparatus of the present disclosure, without limitation thereto. For example, the method for producing the shoe of the present disclosure does not necessarily use the coil inside which the first shoe member and the second shoe member can be arranged, but may be performed by a heating apparatus like a general household IH stove, in which a coil is mounted inside a plate-shaped surface cover. The apparatus for performing the method for producing the shoe of the present disclosure does not necessarily include any pressure-contact mechanism.

As described above, a method for producing a shoe according to this embodiment includes: an arrangement step of arranging a first shoe member and a second shoe member, and an adapter at least comprising a first thermoplastic, a second thermoplastic that differs in kind from the first thermoplastic, and a conductive material, so that the first shoe member and the second shoe member forms an interface through indirect contact with the adapter (bonding aid member) interposed therebetween; and a bonding step of inductively heating the conductive material to add heat to the interface and thereby bond the first shoe member and the second shoe member to each other. The aforementioned embodiment enables the shoe sole members to be more easily bonded to each other than a conventional method. This method for producing the shoe can simplify processes as compared with a conventional bonding method. Further, this method for producing the shoe can be performed by an induction heating apparatus generally smaller than a drying furnace, and thus does not necessitate any large-scale apparatus. Thus, the method for producing the shoe of this embodiment is easily performed at a venue other than a shoemaking factory, and can be performed at, for example, a shoe retailer.

In one form, the conductive material is a material including a metal or carbon. In such a form, the conductive material can be efficiently heated by induction heating. The bonding aid member is an adapter at least including: a first thermoplastic; a second thermoplastic that differs in kind from the first thermoplastic; and the conductive material, the adapter has a first surface and a second surface opposite to the first surface, the first thermoplastic is present at a higher ratio than the second thermoplastic on the first surface, and the second thermoplastic is present at a higher ratio than the first thermoplastic on the second surface, and in the arrangement step, the first shoe member and the second shoe member are arranged to have the first shoe member in abutting contact with the first surface and the second shoe member in abutting contact with the second surface. Thus, in such a form, the first and second shoe members respectively having the first and second bonded surfaces difficult to be directly bonded to each other can be easily bonded to each other via the adapter having the first and second thermoplastics present at different ratios respectively on the first and second surfaces.

The configuration may preferably be such that the bonding aid member is a laminated sheet including: a first preliminary sheet composed of the first thermoplastic; and a second preliminary sheet composed of the second thermoplastic, and the laminated sheet is formed of the first preliminary sheet and the second preliminary sheet directly or indirectly superposed on each other. This configuration can easily provide a large number of combinations of the first thermoplastic and the second thermoplastic as the bonding aid members.

The conductive material is included in the bonding aid member. In such a form, the bonding aid member can be efficiently heated during the induction heating.

In one form, the conductive material has a sheet form. Such a form can secure a large area of the conductive material exposed to electromagnetic waves during induction heating.

In one form, the conductive material has a powder form or a fiber form. Such a form allows the conductive material to be easily arranged in a wide area. Further, such a form can suppress a likelihood that the conductive material reduces the flexibility of the shoe member.

In one form of the aforementioned method, in the arrangement step, the conductive material is arranged to have a smaller thickness in a certain area of the interface than in other areas of the interface. In one form of the aforementioned method, at least one of the first shoe member and the second shoe member is a shoe sole member, and the certain area is provided in a flexibility imparting portion. The shoe including the conductive material formed to have a smaller thickness in the certain area between the first shoe member and the second shoe member than in other areas between the first shoe member and the second shoe member can exhibit excellent flexibility.

A shoe of this embodiment includes: a first shoe member; a second shoe member; and an adapter arranged between the first shoe member and the second shoe member and at least comprising the first thermoplastic, the second thermoplastic that differs in kind from the first thermoplastic, and a conductive material, wherein the first shoe member and the second shoe member are bonded to each other via the adapter comprising the conductive material. Thus, the shoe of this embodiment is easily produced, and the combination of the first and second shoe members is easily customized according to the preferences of a user. Preferably, the first shoe member and the second shoe member can be separated from each other by heating the conductive material. The shoe can be easily repaired, redesigned, or the like when the first shoe member and the second shoe member can be separated from each other by inductively heating the conductive material.

An induction heating bonding apparatus disclosed herein includes: a coil inside which the first shoe member and the second shoe member can be arranged with the interface formed therebetween; and a pressure-contact mechanism configured to bring the first shoe member and the second shoe member into pressure contact with each other in the bonding step. In the induction heating bonding apparatus in one form, the first shoe member is a shoe sole member, and the second shoe member is an upper, the pressure-contact mechanism includes a shoe last configured to enable the upper to be mounted on the shoe last, and the conductive material is arranged at least on a bottom portion of the shoe last. Use of such an inductive heating bonding apparatus enables the aforementioned shoe to be easily produced.

### REFERENCE SIGNS LIST

1: Shoe
2: First shoe member (midsole)
2A: First bonded surface
3: Second shoe member (upper)
3B: Second bonded surface
10, 20, 30, 40, 50: Bonding aid member (adapter)
10A, 20A: First surface
10B, 20B: Second surface
11, 21: First preliminary sheet
12, 22: Second preliminary sheet
15, 25, 35, 45, 55: Conductive material
100: Apparatus (for induction heating)
101: Coil
111, 211: First thermoplastic
121, 221: Second thermoplastic
A: Interface
MF: Alternating magnetic field

## Claims

1. A method for producing a shoe (1), the method comprising:
an arrangement step of arranging a first shoe member (2), a second shoe member (3), and an adapter (10, 20) at least comprising a first thermoplastic (111,211), a second thermoplastic (121, 221) that differs in kind from the first thermoplastic (111, 211), and a conductive material (15, 25), so that the first shoe member (2) and the second shoe member (3) forms an interface (A) through indirect contact with the adapter (10, 20); and
a bonding step of inductively heating the conductive material (15, 25) to add heat to the interface (A) and thereby bond the first shoe member (2) and the second shoe member (3) to each other, wherein
the adapter (10, 20) has a first surface (10A, 20A) and a second surface (10B, 20B) opposite to the first surface (10A, 20A), the first thermoplastic (111, 211) is present at a higher ratio than the second thermoplastic (121, 221) on the first surface (10A, 20A), and the second thermoplastic (121, 221) is present at a higher ratio than the first thermoplastic (111, 211) on the second surface (10B, 20B), and
in the arrangement step, the first shoe member (2) and the second shoe member (3) are arranged to have the first shoe member (2) in abutting contact with the first surface (10A, 20A) and the second shoe member (3) in abutting contact with the second surface (10B, 20B).

2. The method for producing the shoe (1) according to claim 1, wherein
the conductive material (15, 25) is a material comprising a metal or carbon.

3. The method for producing the shoe (1) according to claim 1, wherein
the adapter (10, 20) is a laminated sheet comprising: a first preliminary sheet (11, 21) composed of the first thermoplastic (111, 211); and a second preliminary sheet (12, 22) composed of the second thermoplastic (121, 221), and
the laminated sheet is formed of the first preliminary sheet (11, 21) and the second preliminary sheet (12, 22) directly or indirectly superposed on each other.

4. The method for producing the shoe (1) according to any one of claims 1 to 3, wherein
the conductive material (15, 25) has a sheet form.

5. The method for producing the shoe (1) according to any one of claims 1 to 3, wherein
the conductive material (15, 25) has a powder form or a fiber form.

6. The method for producing the shoe (1) according to claim 4, wherein
in the arrangement step, the conductive material (15, 25) is arranged to have a smaller thickness in a certain area (20") of the interface (A) than in other areas (20') of the interface (A).

7. The method for producing the shoe (1) according to claim 6, wherein
at least one of the first shoe member (2) and the second shoe member (3) is a shoe sole member, and
the certain area (20") is provided in a flexibility imparting portion.

8. A shoe (1) comprising:
a first shoe member (2);
a second shoe member (3); and
an adapter (10, 20) arranged between the first shoe member (2) and the second shoe member (3) and at least comprising a first thermoplastic (111, 211), a second thermoplastic (121, 221) that differs in kind from the first thermoplastic (111, 211), and a conductive material (15, 25), wherein
the first shoe member (2) and the second shoe member (3) are bonded to each other via the adapter (10, 20) comprising the conductive material (15, 25),
the adapter (10, 20) has a first surface (10A, 20A) and a second surface (10B, 20B) opposite to the first surface (10A, 20A), the first thermoplastic (111, 211) is present at a higher ratio than the second thermoplastic (121, 221) on the first surface (10A, 20A), and the second thermoplastic (121, 221) is present at a higher ratio than the first thermoplastic (111, 211) on the second surface (10B, 20B), and
the first shoe member (2) and the second shoe member (3) are arranged to have the first shoe member (2) in abutting contact with the first surface (10A, 20A) and the second shoe member (3) in abutting contact with the second surface (10B, 20B).

9. The shoe (1) according to claim 8, wherein
the first shoe member (2) and the second shoe member (3) can be separated from each other by inductively heating the conductive material (15, 25).

10. The shoe (1) according to claim 8 or 9, wherein
the conductive material (15, 25) is a material comprising a metal or carbon.

11. The shoe (1) according to any one of claims 8 to 10, wherein
the conductive material (15, 25) has a sheet form.

12. The shoe (1) according to any one of claims 8 to 10, wherein
the conductive material (15, 25) has a powder form or a fiber form.

13. The shoe (1) according to claim 11, wherein
the conductive material (15, 25) has a smaller thickness in a certain area (20") between the first shoe member (2) and the second shoe member (3) than in other areas (20') between the first shoe member (2) and the second shoe member (3).

14. The shoe (1) according to claim 13, wherein
at least one of the first shoe member (2) and the second shoe member (3) is a shoe sole member, and
the certain area (20") is provided in a flexibility imparting portion.

15. The shoe (1) according to any one of claims 8 to 14, wherein
the first shoe member (2) is a shoe sole member, and
the second shoe member (3) is an upper.

## Patentansprüche

1. Verfahren zur Herstellung eines Schuhs (1), wobei das Verfahren umfasst:
einen Anordnungsschritt des Anordnens eines ersten Schuhelements (2), eines zweiten Schuhelements (3) und eines Adapters (10, 20), der zumindest einen ersten Thermoplast (111, 211), einen zweiten Thermoplast (121, 221), der sich in seiner Art von dem ersten Thermoplast (111, 211) unterscheidet, und ein leitfähiges Material (15, 25) umfasst, so dass das erste Schuhelement (2) und das zweite Schuhelement (3) durch indirekten Kontakt mit dem Adapter (10, 20) eine Grenzfläche (A) bilden; und
einen Verbindungsschritt des induktiven Erwärmens des leitfähigen Materials (15, 25), um der Grenzfläche (A) Wärme zuzuführen und dadurch das erste Schuhelement (2) und das zweite Schuhelement (3) miteinander zu verbinden, wobei
der Adapter (10, 20) eine erste Oberfläche (10A, 20A) und eine zweite Oberfläche (10B, 20B) gegenüber der ersten Oberfläche (10A, 20A) aufweist, der erste Thermoplast (111, 211) in einem höheren Verhältnis als der zweite Thermoplast (121, 221) auf der ersten Oberfläche (10A, 20A) vorhanden ist, und der zweite Thermoplast (121, 221) in einem höheren Verhältnis als der erste Thermoplast (111, 211) auf der zweiten Oberfläche (10B, 20B) vorhanden ist, und
in dem Anordnungsschritt das erste Schuhelement (2) und das zweite Schuhelement (3) so angeordnet werden, dass das erste Schuhelement (2) in anliegendem Kontakt mit der ersten Oberfläche (10A, 20A) und das zweite Schuhelement (3) in anliegendem Kontakt mit der zweiten Oberfläche (10B, 20B) ist.

2. Verfahren zur Herstellung des Schuhs (1) nach Anspruch 1, wobei
das leitende Material (15, 25) ein Material ist, das ein Metall oder Kohlenstoff umfasst.

3. Verfahren zur Herstellung des Schuhs (1) nach Anspruch 1, wobei
der Adapter (10, 20) eine laminierte Folie ist, umfassend: eine erste vorläufige Folie (11, 21), die aus dem ersten Thermoplast (111, 211) besteht; und eine zweite vorläufige Folie (12, 22), die aus dem zweiten Thermoplast (121, 221) besteht, und
die laminierte Folie aus der ersten vorläufigen Folie (11, 21) und der zweiten vorläufigen Folie (12, 22) gebildet ist, die direkt oder indirekt übereinander liegen.

4. Verfahren zur Herstellung des Schuhs (1) nach einem der Ansprüche 1 bis 3, wobei
das leitfähige Material (15, 25) eine Plattenform aufweist.

5. Verfahren zur Herstellung des Schuhs (1) nach einem der Ansprüche 1 bis 3, wobei
das leitfähige Material (15, 25) eine Pulverform oder eine Faserform aufweist.

6. Verfahren zur Herstellung des Schuhs (1) nach Anspruch 4, wobei
in dem Anordnungsschritt das leitfähige Material (15, 25) so angeordnet wird, dass es in einem bestimmten Bereich (20") der Grenzfläche (A) eine geringere Dicke aufweist als in anderen Bereichen (20') der Grenzfläche (A).

7. Verfahren zur Herstellung des Schuhs (1) nach Anspruch 6, wobei
mindestens eines von dem ersten Schuhelement (2) und dem zweiten Schuhelement (3) ein Schuhsohlenelement ist, und
der bestimmte Bereich (20") in einem Flexibilität verleihenden Abschnitt vorgesehen ist.

8. Ein Schuh (1), umfassend:
ein erstes Schuhelement (2);
ein zweites Schuhelement (3); und
einen Adapter (10, 20), der zwischen dem ersten Schuhelement (2) und dem zweiten Schuhelement (3) angeordnet ist und zumindest einen ersten Thermoplast (111, 211), einen zweiten Thermoplast (121, 221), der sich in seiner Art von dem ersten Thermoplast (111, 211) unterscheidet, und ein leitfähiges Material (15, 25) umfasst, wobei
das erste Schuhelement (2) und das zweite Schuhelement (3) über den Adapter (10, 20), der das leitfähige Material (15, 25) umfasst, miteinander verbunden sind,
der Adapter (10, 20) eine erste Oberfläche (10A, 20A) und eine der ersten Oberfläche (10A, 20A) gegenüberliegende zweite Oberfläche (10B, 20B) aufweist, der erste Thermoplast (111, 211) in einem höheren Verhältnis als der zweite Thermoplast (121, 221) auf der ersten Oberfläche (10A, 20A) vorhanden ist, und der zweite Thermoplast (121, 221) in einem höheren Verhältnis als der erste Thermoplast (111, 211) auf der zweiten Oberfläche (10B, 20B) vorhanden ist, und
das erste Schuhelement (2) und das zweite Schuhelement (3) so angeordnet sind, dass das erste Schuhelement (2) in anliegendem Kontakt mit der ersten Oberfläche (10A, 20A) und das zweite Schuhelement (3) in anliegendem Kontakt mit der zweiten Oberfläche (10B, 20B) steht.

9. Schuh (1) nach Anspruch 8, wobei
das erste Schuhelement (2) und das zweite Schuhelement (3) durch induktives Erwärmen des leitfähigen Materials (15, 25) voneinander getrennt werden können.

10. Schuh (1) nach Anspruch 8 oder 9, wobei
das leitfähige Material (15, 25) ein Material ist, das ein Metall oder Kohlenstoff umfasst.

11. Schuh (1) nach einem der Ansprüche 8 bis 10, wobei
das leitfähige Material (15, 25) eine Plattenform aufweist.

12. Schuh (1) nach einem der Ansprüche 8 bis 10, wobei
das leitfähige Material (15, 25) eine Pulverform oder eine Faserform aufweist.

13. Schuh (1) nach Anspruch 11, wobei
das leitfähige Material (15, 25) in einem bestimmten Bereich (20") zwischen dem ersten Schuhelement (2) und dem zweiten Schuhelement (3) eine geringere Dicke aufweist als in anderen Bereichen (20') zwischen dem ersten Schuhelement (2) und dem zweiten Schuhelement (3).

14. Schuh (1) nach Anspruch 13, wobei
mindestens eines von dem ersten Schuhelement (2) und dem zweiten Schuhelement (3) ein Schuhsohlenelement ist, und
der bestimmte Bereich (20") in einem Flexibilität verleihenden Abschnitt vorgesehen ist.

15. Schuh (1) nach einem der Ansprüche 8 bis 14, wobei
das erste Schuhelement (2) ein Schuhsohlenelement ist, und
das zweite Schuhelement (3) ein Oberteil ist.

## Revendications

1. Procédé de fabrication d'une chaussure (1), le procédé comprenant :
une étape d'agencement consistant à disposer un premier élément de chaussure (2), un second élément de chaussure (3) et un adaptateur (10, 20) comprenant au moins un premier thermoplastique (111, 211), un second thermoplastique (121, 221) de nature différente du premier thermoplastique (111, 211) et un matériau conducteur (15, 25), de sorte que le premier élément de chaussure (2) et le second élément de chaussure (3) forment une interface (A) par contact indirect avec l'adaptateur (10, 20) ; et
une étape de collage consistant à chauffer par induction le matériau conducteur (15, 25) pour ajouter de la chaleur à l'interface (A) et ainsi coller le premier élément de chaussure (2) et le second élément de chaussure (3) l'un à l'autre, dans lequel
l'adaptateur (10, 20) présente une première surface (10A, 20A) et une seconde surface (10B, 20B) opposée à la première surface (10A, 20A), le premier thermoplastique (111, 211) est présent à un taux plus élevé que le second thermoplastique (121, 221) sur la première surface (10A, 20A), et le second thermoplastique (121, 221) est présent à un taux plus élevé que le premier thermoplastique (111, 211) sur la seconde surface (10B, 20B), et
lors de l'étape d'agencement, le premier élément de chaussure (2) et le second élément de chaussure (3) sont agencés de manière à ce que le premier élément de chaussure (2) soit en contact en butée avec la première surface (10A, 20A) et que le second élément de chaussure (3) soit en contact en butée avec la seconde surface (10B, 20B).

2. Procédé de fabrication de la chaussure (1) selon la revendication 1, dans lequel
le matériau conducteur (15, 25) est un matériau comprenant un métal ou du carbone.

3. Procédé de fabrication de la chaussure (1) selon la revendication 1, dans lequel
l'adaptateur (10, 20) est une feuille stratifiée comprenant : une première feuille préliminaire (11, 21) composée du premier thermoplastique (111, 211) ; et
une seconde feuille préliminaire (12, 22) composée du second thermoplastique (121, 221), et
la feuille stratifiée est formée de la première feuille préliminaire (11, 21) et de la seconde feuille préliminaire (12, 22) superposées directement ou indirectement l'une sur l'autre.

4. Procédé de fabrication de la chaussure (1) selon l'une quelconque des revendications 1 à 3, dans lequel
le matériau conducteur (15, 25) se présente sous une forme d'une feuille.

5. Procédé de fabrication de la chaussure (1) selon l'une quelconque des revendications 1 à 3, dans lequel
le matériau conducteur (15, 25) se présente sous une forme d'une poudre ou une forme de fibre.

6. Procédé de fabrication de la chaussure (1) selon la revendication 4, dans lequel
dans l'étape d'agencement, le matériau conducteur (15, 25) est arrangé pour avoir une épaisseur plus faible dans une zone déterminée (20") de l'interface (A) que dans d'autres zones (20') de l'interface (A).

7. Procédé de fabrication de la chaussure (1) selon la revendication 6, dans lequel
au moins un parmi le premier élément de la chaussure (2) et le second élément de la chaussure (3) est un élément de semelle de chaussure, et
la zone déterminée (20") est pourvue d'une partie conférant la flexibilité.

8. Chaussure (1) comprenant :
un premier élément de chaussure (2) ;
un second élément de chaussure (3) ; et
un adaptateur (10, 20) disposé entre le premier élément de chaussure (2) et le second élément de chaussure (3) et comprenant au moins un premier thermoplastique (111, 211), un second thermoplastique (121, 221) de nature différente du premier thermoplastique (111, 211) et un matériau conducteur (15, 25), dans laquelle
le premier élément de chaussure (2) et le second élément de chaussure (3) sont liés l'un à l'autre par l'intermédiaire de l'adaptateur (10, 20) comprenant le matériau conducteur (15, 25),
l'adaptateur (10, 20) présente une première surface (10A, 20A) et une seconde surface (10B, 20B) opposée à la première surface (10A, 20A), le premier thermoplastique (111, 211) est présent à un taux plus élevé que le second thermoplastique (121, 221) sur la première surface (10A, 20A), et le second thermoplastique (121, 221) est présent à un taux plus élevé que le premier thermoplastique (111, 211) sur la seconde surface (10B, 20B), et
le premier élément de chaussure (2) et le second élément de chaussure (3) sont disposés de manière à ce que le premier élément de chaussure (2) soit en contact en butée avec la première surface (10A, 20A) et que le second élément de chaussure (3) soit en contact en butée avec la seconde surface (10B, 20B).

9. Chaussure (1) selon la revendication 8, dans laquelle
le premier élément de chaussure (2) et le second élément de chaussure (3) peuvent être séparés l'un de l'autre en chauffant par induction le matériau conducteur (15, 25).

10. Chaussure (1) selon la revendication 8 ou 9, dans laquelle
le matériau conducteur (15, 25) est un matériau comprenant un métal ou du carbone.

11. Chaussure (1) selon l'une quelconque des revendications 8 à 10, dans laquelle
le matériau conducteur (15, 25) se présente sous une forme d'une feuille.

12. Chaussure (1) selon l'une quelconque des revendications 8 à 10, dans laquelle
le matériau conducteur (15, 25) se présente sous une forme d'une poudre ou une forme de fibre.

13. Chaussure (1) selon la revendication 11, dans laquelle
le matériau conducteur (15, 25) a une épaisseur plus faible dans une zone déterminée (20") entre le premier élément de chaussure (2) et le second élément de chaussure (3) que dans d'autres zones (20') entre le premier élément de chaussure (2) et le second élément de chaussure (3).

14. Chaussure (1) selon la revendication 13, dans laquelle
au moins un parmi le premier élément de chaussure (2) et le second élément de chaussure (3) est un élément de semelle de chaussure, et
la zone déterminée (20") est pourvue d'une partie conférant la flexibilité.

15. Chaussure (1) selon l'une quelconque des revendications 8 à 14, dans laquelle
le premier élément de chaussure (2) est un élément de semelle de chaussure, et
le second élément de chaussure (3) est une partie supérieure.
